# EUROPÄISCHE PATENTSCHRIFT

(11) **EP 2 436 554 B1**
(45) Veröffentlichungstag und Bekanntmachung des Hinweises auf die Patenterteilung: **23.09.2015**
(21) Anmeldenummer: 11007880.5
(22) Anmeldetag: 29.09.2011
(51) Int. Cl.: B60N 2/427, B60N 2/42, B60R 21/015

(54) **Vorrichtung und Verfahren zum Absenken eines Fahrzeugsitzes**
Device and method for lowering a vehicle seat
Dispositif et procédé destinés à l'abaissement d'un siège de véhicule

(30) Priorität: 29.09.2010 DE 102010046969
(43) Veröffentlichungstag der Anmeldung: 04.04.2012
(73) Patentinhaber: Audi AG, 85045 Ingolstadt (DE)
(72) Erfinder: Mangold, Steffen, 73495 Stödtlen (DE); Klinkert, Carsten, 85122 Hitzhofen (DE)
(74) Vertreter: Engelhardt, Harald

(56) Entgegenhaltungen:
- DE-C1- 4 323 543
- GB-A- 2 369 772
- US-A- 5 449 214
- US-A1- 2003 227 213
- US-B1- 7 537 261

## Beschreibung

Die Erfindung betrifft eine Vorrichtung zum Absenken eines Fahrzeugsitzes gemäß dem Oberbegriff des Anspruchs 1.

Aus der DE 196 06 605 C2 ist bereits ein Vordersitz bekannt, der bei einem Crash über einen pyrotechnischen Antrieb abgesenkt wird. Konkret greift hier eine Antriebsstange des pyrotechnischen Antriebs mit einer Nase in eine Schienenrastung ein. Im Crashfall, in dem der pyrotechnische Antrieb gezündet wird, wird diese Antriebsstange nach unten ausgefahren und über die Nase die Sitzschale in die Absenklage verfahren, wobei dort die Antriebsstange blockiert, so dass die Sitzschale in ihrer Absenklage gegen ein Rückschwenken arretiert ist. In einer hierzu alternativen Ausgestaltung wird vorgeschlagen, zum Antrieb der Sitzschale aus der Sitznormallage in die Absenklage vier Gurtroller mit einem pyrotechnischen Aufwickelantrieb vorzusehen. Eine derartige Absenkung des gesamten Vordersitzes ist konstruktiv sehr aufwändig, da die Verankerung des Fahrzeugsitzes mit dem Fahrzeugunterboden nicht beeinträchtigt werden darf. Erkennungseinrichtungen für eine Belegung des entsprechenden Fahrzeugsitzes sind nicht vorgesehen.

Weiter betrifft die gattungsgemäße DE 10 2005 041 389 A1 eine Insassenrückhaltevorrichtung für ein Kraftfahrzeug, bei der vorgesehen ist, dass ein vorderer Sitzteilbereich abgesenkt wird, wenn über eine entsprechende Erkennungseinrichtung erfasst wird, dass ein Fahrzeuginsasse nicht angegurtet ist. Zur Absenkung des Sitzteilbereichs sind hier verlagerbare Halte- bzw. Stützstangen gegebenenfalls mit und/oder Kulissenführungen vorgesehen, die so im abzusenkenden Sitzteilbereich schwenkbar angelenkt sind, dass diese bei einer Absenknotwendigkeit des Sitzteils aus ihrer Grundposition heraus verschwenkt werden und dadurch das Absenken freigegeben wird. Diese Halte- bzw. Stützstangen können zum einen selbsttätig, das heißt lediglich durch entsprechende Kraftbeaufschlagung, aus ihrer Verriegelungsposition gelöst werden oder aber auch durch Betätigungselemente wie Aktuatoren aktiv verlagert werden. Alternativ ist hier auch vorgesehen, einen Sitzflächenträger entweder durch die Freigabe eines mechanischen Energiespeichers oder durch einen elektrischen Stellantrieb oder durch einen pyrotechnischen Aktuator als Betätigungselement zu verlagern. Konkrete Ausführungen, wie dies erfolgen soll, sind nicht dargestellt und beschrieben. Auch bei einem derartigen Aufbau handelt es sich insgesamt um einen sowohl herstellungstechnisch als auch montagetechnisch relativ aufwändigen Aufbau, der insgesamt unpraktikabel ist.

Aus der GB 2 369 772 A ist bereits eine Vorrichtung zum Absenken eines Fahrzeugsitzes bekannt, bei der ein Sitzteil im Crashfall abgesenkt werden kann. Konkret ist hier in der Fig. 11 ein Aufbau gezeigt, bei dem ein erster Schwenkarm an einem vorderen Ende einer flächigen Sitzschale und ein zweiter Schwenkarm an einer Gleitschiene jeweils schwenkbar angelenkt ist. Beide Schwenkarme sind mit ihren freien Enden ebenfalls schwenkbar verbunden, wobei die Verschwenkbarkeit der Schwenkarmanordnung insgesamt durch eine die freien Enden durchdringende Sprengschraube blockiert ist. Beim Zünden der Sprengschraube wird dann die Verschwenkung der Schwenkarme freigegeben und die Sitzschale um ein hinteres schienenseitiges Schwenklager nach unten verschwenkt.

Demgegenüber ist es Aufgabe der vorliegenden Erfindung, eine Vorrichtung und ein Verfahren zum Absenken eines Fahrzeugsitzes, insbesondere eines Einzelsitzes bzw. Fahrzeugvordersitzes, zur Verfügung zu stellen, mittels der das Absenken auf einfache Weise mit hoher Funktionssicherheit bedarfsgerecht ermöglicht werden kann.

Diese Aufgabe wird gelöst mit den Merkmalen des Anspruchs 1. Vorteilhafte Ausgestaltungen hierzu sind Gegenstand der darauf rückbezogenen Unteransprüche.

Die Erfindung betrifft eine Vorrichtung zum Absenken eines Fahrzeugsitzes mit einer Auslöseeinrichtung, mittels der ein mittels wenigstens eines Befestigungselementes an einer Trag- und/oder Verstellstruktur des Fahrzeugsitzes festgelegtes Sitzteil eines Fahrzeugsitzes im Crashfall wenigstens bereichsweise aus einer definierten Grundposition absenkbar ist. Das wenigstens eine Befestigungselementist als die Verbindung zwischen dem Sitzteil bzw. einem Sitzteil-Teilbereich einerseits und der Trag- und/oder Verstellstruktur andererseits trennendes Trennelement ausgebildet, dem eine über die Auslöseeinrichtung aktivierbare und/oder zündbare Treib- und/oder Sprengladung zugeordnet ist, die das Trennelement bei einer Zündung einer Treib- und/oder Sprengladung zur wenigstens bereichsweisen Absenkung des Sitzteils oder eines Sitzteil-Teilbereiches in eine Freigabeposition verlagert und/oder zerstört. Weiter ist vorgesehen, dass das Sitzteil ein Schwenkelement, aufweist, das mittels wenigstens einer Schwenklagerverbindung schwenkbar an der Trag- und/oder Verstellstruktur gelagert ist. Die wenigstens eine Schwenklagerverbindung wird hierbei durch das wenigstens eine Trennelement in dessen nicht gezündeter Fixier- bzw. Grundposition blockiert, so dass dementsprechend das Sitzteil fest mit der Trag- und/oder Verstellstruktur verbunden ist. Bei einer Aktivierung bzw. Zündung des Trennelementes wird dagegen die Schwenklagerverbindung freigegeben. In letzterem Falle kann dann das Sitzteil wenigstens bereichsweise mittels der wenigstens einen Schwenklagerverbindung in die abgesenkte Position verschwenkt werden. Dieses Verschwenken erfolgt bevorzugt gewichtskraftbedingt durch die vom Sitzbenutzer auf das Sitzteil ausgeübte Gewichtskraft. Erfindungsgemäß ist vorgesehen, dass das Schwenkelement durch ein Querrohr gebildet ist, das Bestandteil des Sitzteils ist und/oder auf dem ein Sitzteilpolsterelement des Sitzteils mittelbar oder unmittelbar gehaltert ist. Das Querrohr kann somit in einer vorteilhaften Doppelfunktion gleichzeitig auch als Bestandteil der Schwenklagerverbindurtg verwendet werden. Zudem ermöglicht eine derartige Schwenklagerverbindung ein definiertes Absenken des Sitzteils, insbesondere des gewünschten Sitzteilbereichs, ohne dass hierfür aufwändige Mechaniken und/oder Betätigungseinrichtungen vorgesehen werden müssen.

Ein derartiger Aufbau ist zudem insbesondere dann vorteilhaft, wenn dem Fahrzeugsitz wenigstens ein Insassen-Rückhaltemittel, insbesondere wenigstens ein Sicherheitsgurt und eine Erfassungseinrichtung zur Erfassung einer ordnungsgemäßen Verwendung des wenigstens einen Insassen-Rückhaltemittels durch einen Sitzbenutzer zugeordnet ist, die so ausgebildet und/oder ausgelegt ist, dass die wenigstens teilweise Absenkung des Sitzteils mittels der Auslöseeinrichtung im Crashfall nur für den Fall freigegeben ist, dass ein nicht ordnungsgemäß verwendetes Insassen-Rückhaltemittel erfasst wird. Denn dann kann mit einer derartigen erfindungsgemäßen Lösung bei der Erfassung eines nicht angegurteten Fahrzeuginsassen auf einfache und zuverlässige Weise durch die Absenkung wenigstens eines Teilbereichs des Sitzteils bzw. des Fahrzeugsitzes eine gegebenenfalls erforderliche vergrößerte Kopffreiheit für die zum Beispiel nicht angegurteten Fahrzeuginsassen, insbesondere im Bereich des Dachrahmens, zur Verfügung gestellt werden.

Mit einer derartigen erfindungsgemäßen Lösung wird somit einerseits eine einfach herstellbare und funktionssichere Verbindung zwischen der Trag- und/oder Verstellmechanik und dem Sitzteil hergestellt, die im montierten Grundzustand zuverlässig die Positionierung des Sitzteils in der gewünschten Weise ermöglicht. Durch das Vorsehen eines erfindungsgemäßen Trennelementes kann dann ebenso funktionssicher auf schnelle Weise diese Verbindung aufgehoben werden und somit das Absenken des Sitzteils, oder eines Sitzteil-Teilbereiches insbesondere eines vorderen Bereichs eines Sitzteils, in einfacher Weise durch das darauf ruhende Gewicht des Fahrzeuginsassen freigegeben werden.

An dieser Stelle sei ausdrücklich erwähnt, dass die Begrifflichkeit "Sitzteil" hier in einem umfassenden Sinne zu verstehen ist und jedwede mögliche ein- oder mehrteilige Sitzteilausgestaltung umfassen soll, wobei das Sitzteil insbesondere durch eine Polsterung mit entsprechender Tragstruktur ausgebildet sein kann. Ebenso kann es sich um materialeinheitlich und/oder einstückige Sitzteilkonstruktionen, zum Beispiel Kunststoffsitzschalen bzw. Kunststoffsitzwannen oder dergleichen handeln. Das Sitzteil kann grundsätzlich durch ein von einer Sitzlehne getrenntes separates Bauteil gebildet sein. Grundsätzlich besteht aber auch die Möglichkeit, dass das Sitzteil mit der Sitzlehne einstückig und/oder materialeinheitlich verbunden ist.

Gemäß einer besonders bevorzugten erfindungsgemäßen Ausgestaltung ist das wenigstens eine Trennelement durch einen in einem Bolzengehäuse verschiebbar gelagerten Trennbolzen gebildet, welcher Trennbolzen mittels eines Kraftspeichers, insbesondere mittels eines Federelementes, in seine Fixierposition an einem Eingriffsbereich, zum Beispiel an einem Eingriffsbereich der Trag- und/oder Verstellstruktur, vorgespannt ist. Diesem Trennbolzen ist dann die Treib- und/oder Sprengladung so zugeordnet, dass diese den Trennbolzen bei deren Aktivierung bzw. Zündung gegen die Kraft des Kraftspeichers verlagert und dadurch den Trennbolzen außer Eingriff mit einem zugeordneten sitzseitigen Eingriffsbereich, der zum Beispiel an der Trag- und/oder Verstellstruktur ausgebildet ist, bringt. Mit einer derartigen konkreten erfindungsgemäßen Ausgestaltung wird auf einfache Weise eine zuverlässige Vorspannung des Trennelementes bzw. des Trennbolzens in Richtung dessen Fixierstellung im Eingriffsbereich erzielt, der zum Beispiel an der Trag- und/oder Verstellstruktur ausgebildet ist. Des Weiteren wird mittels der durch die Treib- und/oder Sprengladung bewirkten Druckwellenverlagerung des Trennbolzens gegen die Kraft des Kraftspeichers eine ebenso einfache wie funktionssichere Verlagerung des Trennbolzens in dessen Freigabeposition ermöglicht, in der sich dieser außer Eingriff mit dem Eingriffsbereich befindet.

Gemäß einer weiteren bevorzugten konkreten Ausgestaltung ist vorgesehen, dass sich der Trennbolzen in seiner Fixierposition mit einem freien Trennbolzenendbereich in einem formschlüssigen Rasteingriff mit einem Rastgegenelement, insbesondere einer Ausnehmung, befindet. Eine derartige Rastverbindung ist einfach herstellbar und bewirkt eine zuverlässige Verriegelung des Trennbolzens mit dem zugeordneten Eingriffsbereich der zum Beispiel Trag- und/oder Verstellstruktur des Fahrzeugsitzes. Besonders bevorzugt ist dabei eine Ausgestaltung, bei der ein freies Trennbolzenende verjüngt, insbesondere kegel- oder konusartig ausgebildet ist und mit einer entsprechend verjüngt bzw. kegel- oder konusartig ausgebildeten Ausnehmung zusammenwirkt. Durch eine derartige Verjüngung bzw. Schrägflächenausbildung wird auf einfache Weise sichergestellt, dass der Trennbolzen sich nicht festsetzen kann und somit einem Klemmen des Trennelementes funktionssicher entgegenwirkt. Des Weiteren wird hierdurch sichergestellt, dass im Rahmen der Montage ein einfaches Einfädeln des Trennbolzens in die Ausnehmung erfolgen kann.

Der Eingriffsbereich des Trennbolzens wird bevorzugt an der Trag- und/oder Verstellstruktur des Fahrzeugsitzes, zum Beispiel einem Seitenteil des Fahrzeugsitzes, ausgebildet, so dass der Trennbolzen bzw. das Bolzengehäuse dann mittelbar oder unmittelbar am Sitzteil angeordnet ist. Der Eingriffsbereich kann aber in einer äquivalenten Anordnung selbstverständlich auch am Sitzteil angeordnet sein, so dass der Eingriff entsprechend umgekehrt mittelbar oder unmittelbar am Sitzteil oder an einem Sitzteil-Teilbereich erfolgt. Diese beiden Varianten sollen, auch wenn nachfolgend die weiteren Ausführungsformen lediglich anhand einer dieser Varianten erläutert werden, ausdrücklich vom Schutzumfang erfasst sein.

Die Trag- und/oder Verstellstruktur kann grundsätzlich auf unterschiedlichste Weise hergestellt sein. In einfachster Weise kann es sich hierbei zum Beispiel um ein herkömmliches Seitenteil eines Fahrzeugsitzes handeln. Die Begrifflichkeit Trag- oder Verstellstruktur soll weiter zum Ausdruck bringen, dass es sich bei diesem Bestandteil des Fahrzeugsitzes um Bauteile bzw. Bauelemente eines als Modulsitz ausgebildeten Fahrzeugsitzes handelt, die es einem Sitzbenutzer ermöglichen, das Sitzteil bzw. die Rückenlehne oder wenigstens Teile davon in unterschiedlichste Stellungen zu verlagern. Hierbei können zum Beispiel einzelne Sitzbestandteile durch zum Beispiel Aktuatoren oder dergleichen in unterschiedlichste Positionen verlagert werden. Andererseits kann es sich aber auch um einen relativ einfach aufgebauten Fahrzeugsitz handeln, der zum Beispiel fest und unverschiebbar im Fahrzeug verbaut ist. Die Begrifflichkeit Trag- und/oder Verstellstruktur ist damit ausdrücklich ebenfalls in einem weiten Sinne zu verstehen.

Gemäß einer besonders bevorzugten konkreten Ausgestaltung der vorliegenden Erfindungsidee wird weiter vorgeschlagen, dass der Trennbolzen einen wenigstens bereichs- und/oder abschnittsweise, vorzugsweise ringförmig umlaufenden Bolzenbund aufweist, an den sich wenigstens in Richtung auf den Eingriffsbereich zu ein durchmesserkleinerer Schaftbereich eines Bolzenschaftes anschließt. Der Trennbolzen ist mit diesem Bolzenbund in einer ersten Bolzenkammer des Bolzengehäuses formschlüssig und zwischen einer Fixierposition, in der sich der Trennbolzen in Eingriff mit dem Eingriffsbereich befindet, und einer Freigabeposition, in der sich der Trennbolzen außer Eingriff mit dem Eingriffsbereich befindet, verlagerbar gelagert. Weiter ist in der ersten Bolzenkammer ein Kraftspeicher angeordnet, der den Trennbolzen und/oder den Bolzenbund in die Fixierposition kraftbeaufschlagt bzw. in dieser hält. Das Bolzengehäuse weist ferner als zweite Bolzenkammer, die sich vorzugsweise unmittelbar an die erste Bolzenkammer anschließt, eine Aufnahmekammer für die Treib- und/oder Sprengladung auf, die den Bolzenschaft, insbesondere dem durchmesserkleineren Bolzenschaftbereich, zugeordnet ist und die mittelbar oder unmittelbar mit einem Zündmechanismus gekoppelt ist. Dadurch wird erreicht, dass bei einer über die Auslöseeinrichtung erfolgenden Zündung der Treib- und/oder Sprengladung die Treibgase den Bolzenbund druckwellenartig beaufschlagen und den Trennbolzen gegen die Kraft des Kraftspeichers von der Fixierposition in die Freigabeposition überführen. Mit einem derartigen konkreten Aufbau des Trennbolzens und der den Trennbolzen aufnehmenden Bolzenkammer des Bolzengehäuses wird eine besonders einfach herstellbare und funktionssichere Lagerung als auch Verlagerung des Trennbolzens am Trennelement möglich. Zudem ist ein derartiges Trennelement mit Bolzengehäuse und Trennbolzen auf einfache Weise herstellbar und auch montierbar.

Weiter kann vorgesehen sein, dass sich an die zweite Bolzenkammer eine das Bolzenschaftende formschlüssig aufnehmende und führend abstützende Gehäuseausnehmung anschließt, durch die hindurch das freie Trennbolzenende in Richtung auf dessen Rasteingriff verlagerbar ist. Bei einem derartigen Aufbau wird eine besonders gute Führung des Trennbolzens im Bolzengehäuse zur Verfügung gestellt. Andererseits wird mit einem derartigen Aufbau auf einfache Weise sichergestellt, dass die Gase nur in Richtung auf den Bund zu entweichen können, was eine besonders funktionssichere Verlagerung des Trennbolzens im Zündfall ermöglicht.

Gemäß einer weiteren besonders bevorzugten funktionsintegrierten Lösung kann am Bolzengehäuse ferner ein Anschlusselement für eine elektrische Zündeinrichtung ausgebildet sein, die mit der Auslöseeinrichtung signaltechnisch verbunden ist und bei einer entsprechenden Ansteuerung die Treib- und/oder Sprengladung zündet. Das Anschlusselement kann beispielsweise auf einfache Art und Weise durch eine Art Steckdose ausgebildet sein, an der ein Zündstecker eingesteckt wird. Eine derartige konkrete Ausgestaltung ermöglicht zudem auch, neben einer einfachen Zugänglichkeit, eine besonders einfache Montage der Vorrichtung insgesamt am Fahrzeugsitz.

Gemäß einer weiteren besonders bevorzugten Ausgestaltung wird vorgeschlagen, dass die Schwenklagerverbindung weiter ein Halteelement, insbesondere eine Halteplatte, aufweist, das einerseits mittelbar oder unmittelbar an dem durch ein Querrohr gebildeten Schwenkelement und andererseits dergestalt mittelbar oder unmittelbar an einem definierten Bereich des Sitzteils angebunden ist, dass das Trennelement bei einer Aktivierung desselben die Verschwenkung des Halteelementes freigibt, so dass das Halteelement bei einer Schwenkverlagerung des Schwenkelementes das Sitzteil oder wenigstens einen Teilbereich des Sitzteils in die abgesenkte Stellung überführt. Mittels eines derartigen Halteelementes wird auf einfache Weise sichergestellt, dass der gewünschte Teilbereich des Sitzteils oder das Sitzteil insgesamt bei einer Schwenkverlagerung des Schwenkelementes funktionssicher, das heißt quasi zwangsgeführt, in die abgesenkte Position verlagerbar ist bzw. verlagert wird.

Das Trennelement, insbesondere ein einen Trennbolzen aufweisendes Bolzengehäuse, ist bevorzugt unmittelbarer oder mittelbarer Bestandteil des Halteelementes, insbesondere an diesem gehaltert und/oder angebunden und/oder angeformt. In diesem Fall würde der Trennbolzen dann zum Beispiel in eine Ausnehmung an der Trag- und/oder Verstellstruktur eingreifen. Alternativ dazu könnte aber auch, wie bereits zuvor erwähnt, das Trennelement, insbesondere ein einen Trennbolzen aufweisendes Bolzengehäuse, an der Trag- und/oder Verstellstruktur angeordnet sein, so dass der Trennbolzen in diesem Fall dann zum Beispiel in eine Ausnehmung des Halteelementes eingreift.

Das Schwenkelement selbst ist bevorzugt mittels einer Schraubverbindung an der Trag- und/oder Verstellstruktur festgelegt, deren Schraubachse die Schwenkachse der Schwenklagerverbindung ausbildet. Mit anderen Worten wird durch eine derartige Schwenkachsen-Schraubverbindung ein Aufbau zur Verfügung gestellt, der zum einen eine funktionssichere Anbindung des Sitzteils oder eines Sitzteil-Teilbereiches an der Trag- und/oder Verstellstruktur ermöglicht, wobei diese Schraubverbindung dann in einer vorteilhaften Doppelfunktion gleichzeitig bei einer entsprechenden Absenkung des Fahrzeugsitzes als Bestandteil der Schwenklagerverbindung die Schwenkachse ausbildet. Auch mit einer derartigen erfindungsgemäßen Ausgestaltung kann somit eine besonders vorteilhafte Bauteil- und Funktionsintegration erzielt werden, so dass der Aufbau insgesamt weniger aufwändig und preisgünstig sowie fertigungstechnisch einfach herstellbar ist.

Gemäß einer weiteren alternativen Ausführungsform der vorliegenden Erfindungsidee wird vorgeschlagen, dass das Trennelement Bestandteil einer Klemmverbindung ist, die wenigstens eine Klemmschelle aufweist, die eine mit dem Trägerelement verbundene Verstellwelle im Grundzustand verklemmt, wobei das Trennelement die Klemmschelle in deren Klemmposition hält. Das Trennelement ist hier als Sprengschraube ausgebildet, die bei einer Zündung der Auslöseeinrichtung die Klemmverbindung freigibt bzw. löst. Auch mit einer derartigen Lösung wird eine einfach herstellbare und funktionssichere Verbindung zwischen der Trag- und/oder Verstellmechanik einerseits und dem Sitzteil andererseits hergestellt, die im montierten Grundzustand zuverlässig die Positionierung des Sitzteils in der gewünschten Weise ermöglicht. Durch das Vorsehen eines Sprengelementes kann dann ebenso funktionssicher auf schnelle Weise diese Verbindung aufgehoben werden und somit das Absenken des Sitzteils, insbesondere eines Teilbereiches eines Sitzteils, in einfacher Weise mittels des Gewichtes des Fahrzeuginsassen freigegeben werden.

Wie bereits zuvor beschrieben, kann grundsätzlich vorgesehen sein, dass das Sitzteil bzw. der Fahrzeugsitz insgesamt abgesenkt wird. Besonders bevorzugt ist jedoch eine Ausgestaltung, bei der das Sitzteil so ausgebildet ist, dass nur ein Sitzteil-Teilbereich, insbesondere ein in Fahrtrichtung vorderer oder hinterer Sitzbereich des Sitzteils abgesenkt werden kann. Die Aufgabe wird ferner durch das Verfahren gemäß Anspruch 15 gelöst, dessen Vorteile bereits zuvor in Verbindung mit der Vorrichtung erläutert wurden.

Die Erfindung wird nachfolgend beispielhaft anhand einer Zeichnung näher erläutert. Die lediglich skizzenhaften Zeichnungen zeigen in:
- Fig. 1: eine Seitenansicht auf ein Personenkraftfahrzeug mit einem Vordersitz, dessen Sitzteil im vorderen Bereich absenkbar ist, wobei die Absenkung über eine Auslöseeinrichtung nur erfolgt, wenn über eine Anschnall-Erkennungseinrichtung und gegebenenfalls eine Sitzbelegungs-Erkennungseinrichtung erkannt ist, dass der Vordersitz belegt und der Insasse nicht über einen Sicherheitsgurt gesichert ist,
- Fig. 2a: schematisch und beispielhaft eine erste Ausführungsform einer erfindungsgemäßen Vorrichtung zum Absenken eines Sitzteils eines Fahrzeugsitzes in der nicht abgesenkten Grundposition,
- Fig. 2b: schematisch die Darstellung gemäß Fig. 2a im abgesenkten Zustand,
- Fig. 3: eine schematische, perspektivische Detailansicht der Schwenklagerverbindung mitsamt Trennelement,
- Fig. 4a: eine schematische Schnittansicht entlang der Linie IV-IV der Fig. 3, wobei sich hier der Trennbolzen in einem Fixiereingriff an einem Bestandteil der Trag- und/oder Verstellmechanik bildenden Seitenteil befindet,
- Fig. 4b: eine Darstellung entsprechend Fig. 4a, bei der sich der Trennbolzen in der Freigabeposition befindet, in der das Verschwenken des Sitzteilbereichs freigegeben ist, und
- Fig. 5: eine schematische Schnittansicht durch eine alternative Ausführungsform, bei der das Querrohr mit Klemmschelle und einer Sprengschraube zum Lösen der Klemmverbindung bzw. zum Absenken eines vorderen Sitzteilbereiches ausgebildet ist.

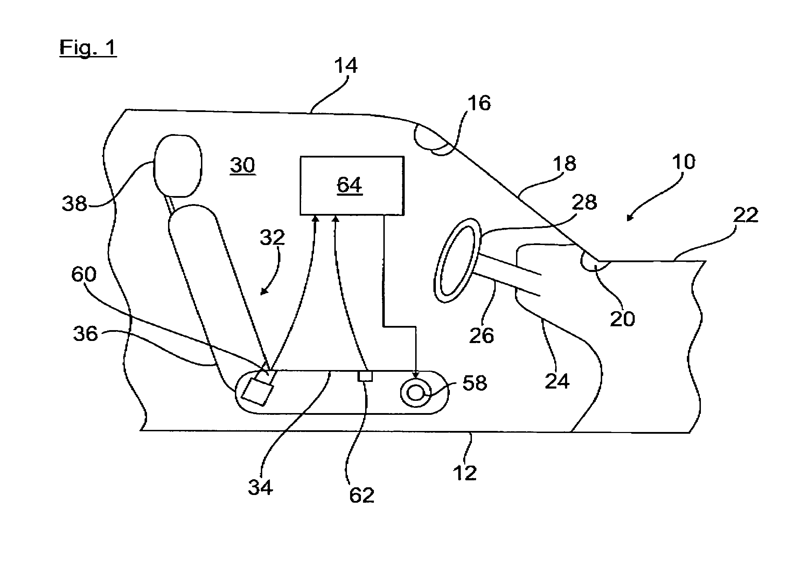

Die Fig. 1 zeigt grob schematisch einen Abschnitt eines Personenkraftfahrzeuges 10 mit einem Unterboden 12, einer Dachstruktur 14 mit einem vorderen Dachrahmen 16, an den eine Windschutzscheibe 18 anschließt, die nach unten in eine nicht näher dargestellte Vorbaustruktur mit einem Wasserkasten 20 und eine Frontklappe 22 übergeht. Im Falle eines Cabriolets kann an den besagten Dachrahmen 16 auch ein zu öffnendes Dach anschließen. Hinter einer Armaturentafel mit Lenksäule 26 und Lenkrad 28 sind im Fahrzeuginnenraum zwei Vordersitze 32 (in der Zeichnung ist nur ein Vordersitz 32 dargestellt) in noch zu beschreibender Weise verstellbar am Unterboden 12 des Kraftfahrzeuges angeordnet; im Ausführungsfall ist dies der Beifahrersitz.

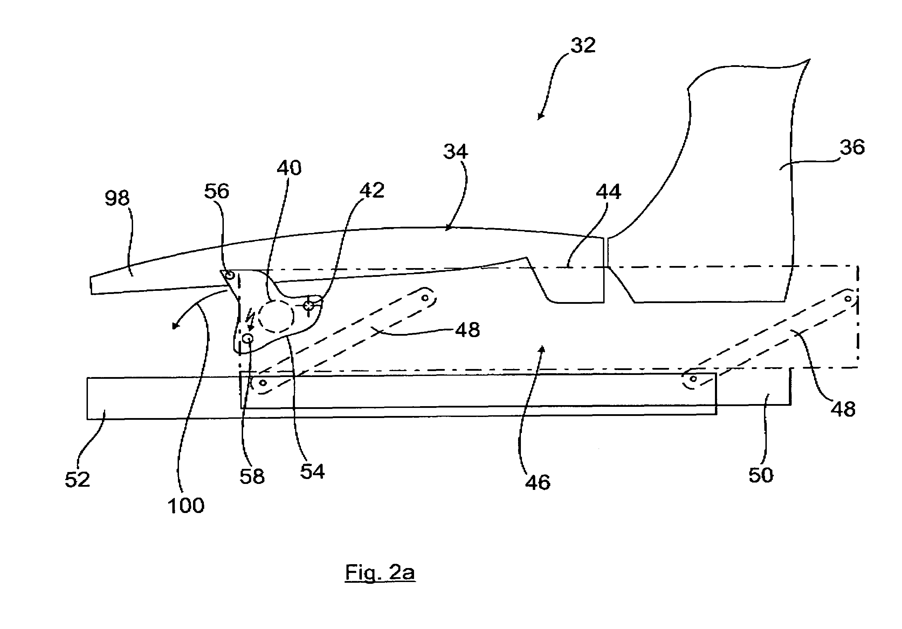

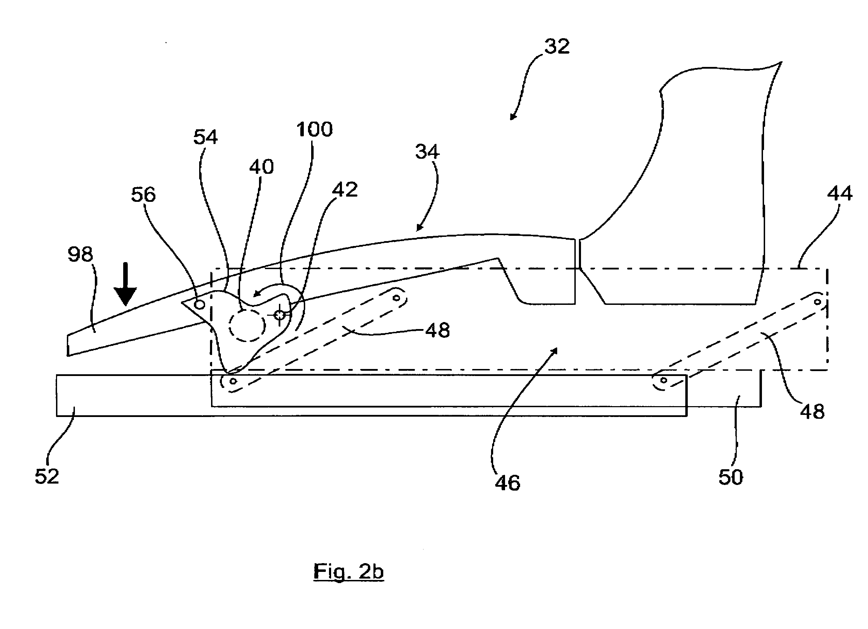

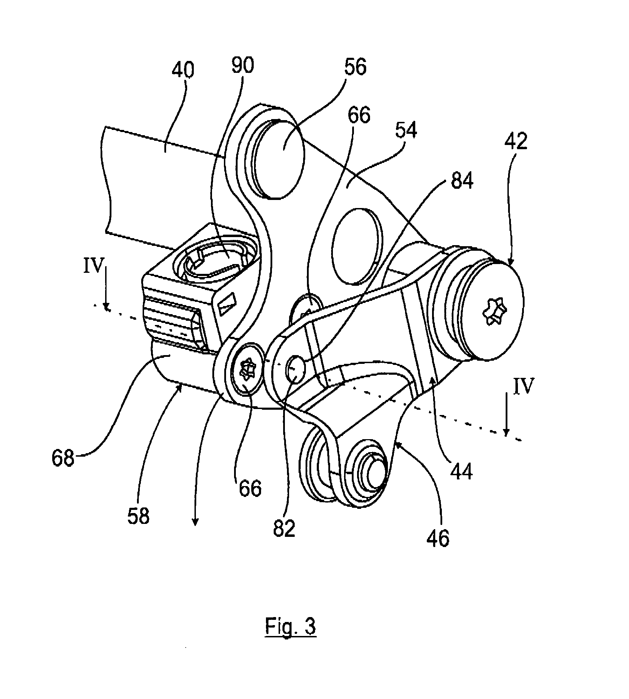

Die Figuren 2a und 2b zeigen die verstellbare Anordnung des Vordersitzes 32, der in bekannter Weise ein Sitzteil 34, eine hier lediglich angedeutete Rückenlehne 36 sowie eine Kopfstütze 38 (vergleiche Fig. 1) aufweist. Das Sitzteil 34 weist beispielsweise eine hier nicht im Detail dargestellte Trägereinrichtung mitsamt darauf gehalterter Sitzpolsterung auf. Ein insbesondere auch aus der Fig. 3 ersichtliches Querrohr 40 ist Bestandteil der Sitzteil-Trägereinrichtung bzw. des Sitzteils 34 und erstreckt sich in die Bildebene hinein und damit in Querrichtung über die gesamte Sitzteilbreite. Wie dies insbesondere auch aus der Fig. 3 ersichtlich ist, ist dieses Querrohr 40 mittels einer Schraubverbindung 42 an einem Seitenteil 44 einer Trag- und/oder Verstellstruktur 46 des Fahrzeugsitzes gelagert, welche Trag- und/oder Verstellstruktur 46 beispielsweise, wie in der Fig. 2a und 2b dargestellt, Hebelelemente 48 für eine Sitzhöhenverstellung bzw. eine Oberschiene 50 und eine Unterschiene 52 für eine Sitzlängsverstellung aufweist. Falls vorhanden, sind diese Verstellstrukturbauteile herkömmlicher Bauart und werden dementsprechend vorliegend nicht näher beschrieben.

Wie dies insbesondere der Zusammenschau der Fig. 2 bis 4 entnommen werden kann, ist am Querrohr 40 ferner eine Halteplatte 54 als Torsionsblech ausgebildet, über das (Fig. 3) mittels eines entsprechenden Befestigungsmittels, zum Beispiel Schraubverbindung 56 eine Anbindung des abzusenkenden Sitzteilbereiches erfolgt.

Des Weiteren ist an dieser Halteplatte 54 bzw. am Querrohr 40 ein nachfolgend noch näher beschriebenes Trennelement 58 angebunden, zum Beispiel an der Halteplatte 54 mit der insbesondere aus der Fig. 3 ersichtlichen Schraubverbindung 66.

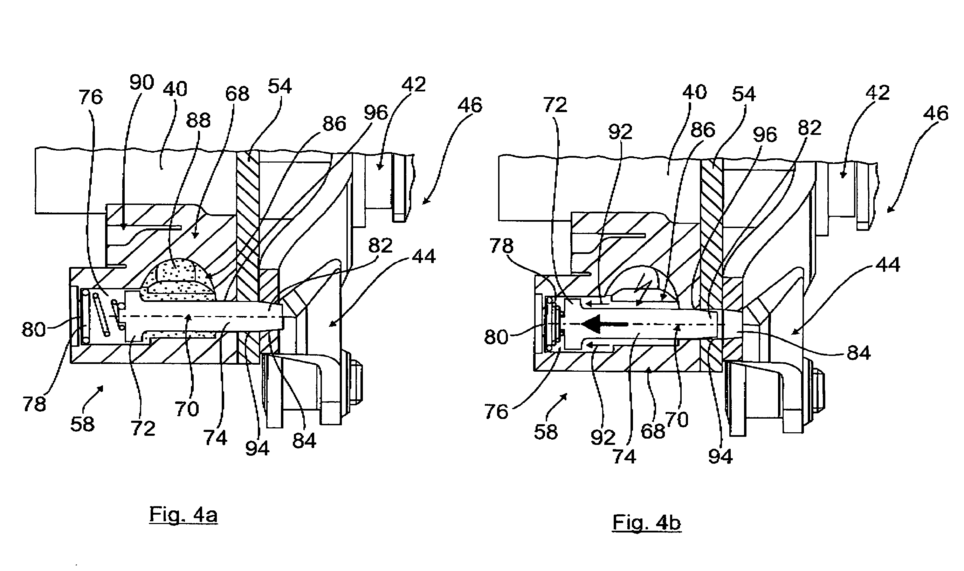

Konkret weist das Trennelement 58 ein Bolzengehäuse 68 auf, in dem ein Trennbolzen 70 in nachfolgend in Verbindung mit den Fig. 4a, 4b noch näher beschriebener Art und Weise verschiebbar zwischen einer Fixierposition (Fig. 4a) und einer Freigabeposition (Fig. 4b) verlagerbar ist.

Der Trennbolzen 70 weist hier an einem ersten Endbereich einen ringförmig umlaufenden Bolzenbund 72 auf, an den sich in Richtung auf die Trag- und/oder Verstellstruktur 46 bzw. das Seitenteil 44 zu ein durchmesserkleinerer Bolzenschaft 74 anschließt.

Der Trennbolzen 70 ist mit dem Bolzenbund 72 in einer ersten Bolzenkammer 76 des Bolzengehäuses 68 im Wesentlichen formschlüssig aufgenommen. In dieser ersten Bolzenkammer 76 findet sich des Weiteren noch ein Federelement 78 als Kraftspeicher, das sich zwischen einem stirnseitigen Wandbereich 80 und dem Bolzenbund 72 abstützt und diesen in die in der Fig. 4a gezeigte Fixierposition vorspannt, in der sich ein hier beispielhaft konisch zulaufendes Trennbolzenende 82 in einem formschlüssigen Eingriff mit einer entsprechend konisch gestalteten Rastausnehmung 84 des Seitenteils 44 der Trag- und/oder Verstellstruktur 46 befindet.

An die erste Bolzenkammer 76 schließt sich am Bolzengehäuse 68 eine eine zweite Bolzenkammer ausbildende Aufnahmekammer 86 für eine in der Fig. 4a lediglich äußerst schematische und durch Punkte dargestellte Treibladung 88 an.

Das Trennelement 58 bzw. dessen Bolzengehäuse 68 kann neben der Anbindung an der Halteplatte 54, wie bereits zuvor geschildert grundsätzlich auch am Querrohr 40 angebunden sein.

Wie dies insbesondere auch aus der Fig. 3 ersichtlich ist, weist das Bolzengehäuse ferner eine Steckaufnahme 90 als Anschlusselement für eine elektrische Zündeinrichtung auf, die mit einer Auslöseeinrichtung 64 (vergleiche Fig. 1) signaltechnisch verbunden ist und bei einer entsprechenden Ansteuerung in noch zu beschreibender Weise die Treibladung 88 zündet.

Die Trag- und/oder Verstellmechaniken bzw. -strukturen 46 können in bekannter Weise elektrisch oder manuell betätigbar ausgeführt sein und ermöglichen je nach Ausführung eine Verstellung des Sitzkissens in Längsrichtung, Hochrichtung und gegebenenfalls auch in der Schräge der Sitzfläche. Die nicht dargestellte Verstellung der Rückenlehne 36 kann ebenfalls in bekannter Weise unabhängig von der Sitzteilverstellung ausgeführt sein.

Wie in der Fig. 1 dargestellt ist, sind an dem Vordersitz 32 eine Anschnall-Erkennungseinrichtung 60 sowie gegebenenfalls eine Sitzbelegungs-Erkennungseinrichtung 62 angeordnet, die mit der Auslöseeinrichtung 64 gekoppelt bzw. verbunden sind. Diese Einrichtungen 60, 62 können in an sich bekannter Weise durch elektrische Schalter gebildet sein, die zum Beispiel in dem Gurtbeschlag eines nicht weiter dargestellten Sicherheitsgurtes oder unterhalb der Sitzfläche des Sitzteils 34 angeordnet sein können und anzeigen, ob der Vordersitz 32 mit einem Insassen belegt ist und, vor allem, ob der Insasse angegurtet ist.

Die Auslöseeinrichtung 64 kann zum Beispiel ein Steuergerät sein, zum Beispiel ein im Kraftfahrzeug bereits vorhandenes, elektronisches Airbag- und/oder Gurtstramm-Steuergerät sein, das über Aufprallsensoren (nicht dargestellt) einen Frontalcrash des Kraftfahrzeuges erkennt und bei Überschreitungen eines definierten Verzögerungs-Grenzwertes die Airbags und gegebenenfalls die Gurtstrammer des Sicherheitsgurtes des Kraftfahrzeuges aktiviert.

Die Auslöseeinrichtung 64 bzw. die entsprechende Steuereinrichtung ist so programmiert, dass eine Ansteuerung des Trennelementes bzw. dessen Zündung für den Vordersitz 32 nur dann erfolgt, wenn erfasst wird, dass der Insasse auf dem Sitz nicht ordnungsgemäß angegurtet ist.

In diesem Fall wird dann, wie dies in der Fig. 4b schematisch dargestellt ist, die Treibladung 88 in der Aufnahmekammer 86 gezündet, wobei die entstehenden Treibgase bzw. die entstehende Druckwelle in Richtung der Pfeile 92 auf den Bolzenbund 72 wirkt, so dass der Trennbolzen 70 gegen die Kraft des Federelementes 78 in Richtung auf den stirnseitigen Wandbereich 80 zuverlagert wird, wodurch die Feder 78 entsprechend zusammegedrückt wird. Dadurch gelangt das Trennbolzenende 82 außer Eingriff mit der Rastausnehmung 84 des Seitenteils 44 der Trag- und/oder Verstellmechanik 46, wobei im hier gezeigten Beispielfall das freie Trennbolzenende 82 in etwa im Bereich einer Ausnehmung 94 der Halteplatte 54 liegt.

Wie dies der Fig. 4b und auch der Fig. 4a weiter entnommen werden kann, ist der Trennbolzen 70 sowohl in der Fixierposition als auch in der in der Fig. 4b gezeigten Freigabeposition im Wesentlichen formschlüssig in einer sich an die Aufnahmekammer 86 in Richtung auf die Halteplatte 54 zu anschließenden Gehäuseausnehmung 96 geführt gelagert, wodurch zum Beispiel ein Verkippen des Trennbolzens und eine optimale Verlagerung des Trennbolzens 70 in die gewünschte Richtung sichergestellt wird.

Sobald sich der Trennbolzen 70 in der in der Fig. 4b gezeigten Freigabestellung befindet, kann, was insbesondere aus der Fig. 2b ersichtlich ist, die Halteplatte 54 mitsamt Querrohr 40 aus der in der Fig. 2a gezeigten Grundposition heraus in die in der Fig. 2b gezeigte abgesenkte Position verschwenkt werden, wodurch das Sitzvorderteil 98 des Sitzteils 34 zwangsgeführt abgesenkt wird. Dabei bildet die Schraubverbindung 42 bzw. deren Schraubachse gleichzeitig die Schwenkachse aus. Das heißt mit anderen Worten, dass die Halteplatte 54 mitsamt Querrohr 40 um die durch die Schraubverbindung 42 gebildete Schwenkachse in Richtung des Pfeils 100 nach unten verschwenkt wird, wodurch die Halteplatte 54 das Sitzvorderteil 98 zwangsgeführt (aufgrund der Anbindung 56) in die abgesenkte Position verlagert wird.

Über die Auslöseeinrichtung 64 können nur der Fahrersitz, nur der Beifahrersitz oder bei entsprechenden Signalen der Anschnallerkennungseinrichtungen 60 und gegebenenfalls der Sitzbelegungs-Erkennungseinrichtung 62 beide Vordersitze 32 wie beschrieben abgesenkt werden.

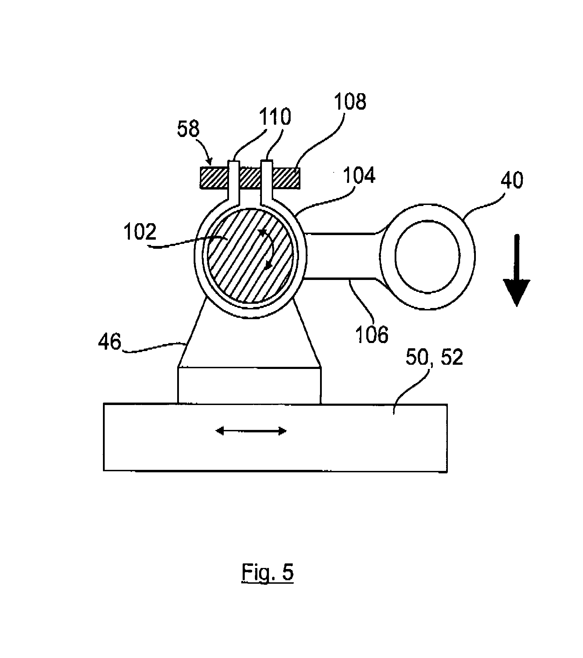

In der Fig. 5 ist eine weitere alternative Ausgestaltung der vorliegenden Erfindungsidee gezeigt, bei der an einer Höhen-Verstellwelle 102 der Trag- und/oder Verstellstruktur 46 eine hier nach oben offene Klemmschelle 104 als Bestandteil eines Trennelementes 58 vorgesehen ist, die über einen daran befestigten, radial und horizontal nach vorne ragenden Hebel 106 mit dem Querrohr 40 fest verbunden ist.

Die zunächst feste Klemmverbindung zwischen der Höhen-Verstellwelle 102 und der Klemmschelle 104 ist mittels einer hier lediglich äußerst schematisch und beispielhaft dargestellten, ebenfalls Bestandteil des Trennelementes 58 bildenden Klemmschraube 108 dargestellt, die die nach oben ragenden Schenkel 110 der Klemmschelle 104 durchragt und diese mit definierter Vorspannung zusammenspannt. Die Klemmschraube 108 ist als Sprengschraube ausgeführt, die pyrotechnisch zündbar in zwei Teile trennbar ist und damit die Klemmverbindung löst. Die als Sprengschrauben ausgeführten Klemmschrauben 108 können im Detail so ausgeführt sein, wie sie in der DE 10 2004 062 079 A1 beschrieben sind, bei denen bei einer pyrotechnischen Zündung ein innerer Riegelbolzen verfahren wird und das Kopfteil der Sprengschraube von dem Schraubenteil mit aufgeschraubter Schraubenmutter trennt. Mit dem Lösen der Klemmverbindung zwischen der Trag- und/oder Verstellstruktur 46 und dem Querrohr 40 kann, wie dies in der Fig. 5 mit dem Pfeil angedeutet ist, der vordere Bereich des Sitzteils 34 durch die Gewichtsbelastung eines Insassen in analoger Weise, wie dies zuvor in Verbindung mit den Fig. 2a und 2b beschrieben worden ist, nahezu verzögerungsfrei abgesenkt werden.

## Patentansprüche

1. Vorrichtung zum Absenken eines Fahrzeugsitzes in einem Kraftfahrzeug, mit einer Auslöseeinrichtung (64), mittels der ein, mittels wenigstens eines Befestigungselementes an einer Trag- und/oder Verstellstruktur (46) des Fahrzeugsitzes festgelegtes Sitzteil (34) eines Fahrzeugsitzes im Crashfall wenigstens bereichsweise aus einer definierten Grundposition absenkbar ist, wobei das wenigstens eine Befestigungselement durch ein die Verbindung zwischen dem Sitzteil (34) oder einem Sitzteil-Teilbereich und der Trag- und/oder Verstellstruktur (46) trennendes Trennelement (58) gebildet ist, dem eine über die Auslöseeinrichtung (64) zündbare Treib- und/oder Sprengladung (88) zugeordnet ist, die das Trennelement (58) bei einer Zündung der Treib- und/oder Sprengladung (88) zur wenigstens bereichsweisen Absenkung des Sitzteils (34) oder eines Sitzteil-Teilbereiches in eine Freigabeposition verlagert und/oder zerstört, wobei das Sitzteil (34) ein Schwenkelement (40) aufweist, das mittels wenigstens einer Schwenklagerverbindung (42) schwenkbar an der Trag- und/oder Verstellstruktur (46) gelagert ist, und wobei die wenigstens eine Schwenklagerverbindung (42) durch das wenigstens eine Trennelement (58) in dessen nicht gezündeter Fixier- und Grundposition blockiert und in dessen Zündposition so freigegeben ist, dass das Sitzteil (34) wenigstens bereichsweise mittels der wenigstens einen Schwenklagerverbindung (42) in die abgesenkte Position verschwenkbar ist, **dadurch gekennzeichnet, dass** das Schwenkelement (40) durch ein Querrohr gebildet ist, das Bestandteil des Sitzteils (34) ist und/oder auf dem ein Sitzteilpolsterelement des Sitzteils (34) mittelbar oder unmittelbar gehaltert ist.

2. Vorrichtung nach Anspruch 1, **dadurch gekennzeichnet, dass** die Schwenklagerverbindung weiter ein Halteelement (54), insbesondere eine Halteplatte, aufweist, das einerseits mittelbar oder unmittelbar an dem durch ein Querrohr gebildeten Schwenkelement (40) und andererseits dergestalt mittelbar oder unmittelbar an einem definierten Bereich des Sitzteils (34) angebunden ist, dass das Trennelement (58) bei einer Aktivierung desselben die Verschwenkung des Halteelement (54) freigibt, so dass das Halteelement (54) bei einer Schwenkverlagerung des durch ein Querrohr gebildeten Schwenkelementes (40) das Sitzteil (34) oder wenigstens einen Teilbereich des Sitzteils (34) in die abgesenkte Stellung überführt.

3. Vorrichtung nach Anspruch 2, **dadurch gekennzeichnet, dass** das Trennelement (58), insbesondere ein einen Trennbolzen (70) aufweisendes Bolzengehäuse (68), unmittelbarer oder mittelbarer Bestandteil des Halteelementes (54) ist, insbesondere an diesem gehaltert und/oder angebunden und/oder angeformt ist.

4. Vorrichtung nach einem der Ansprüche 1 bis 3, **dadurch gekennzeichnet, dass** das Schwenkelement (40) mittels einer Schraubverbindung an der Trag- und/oder Verstellmechanik festgelegt ist, deren Schraubachse die Schwenkachse der Schwenklagerverbindung (42) ausbildet.

5. Vorrichtung nach einem der vorhergehenden Ansprüche, **dadurch gekennzeichnet,**
**dass** dem Fahrzeugsitz wenigstens ein Insassen-Rückhaltemittel, insbesondere wenigstens ein Sicherheitsgurt, zugeordnet ist, und
**dass** eine Erfassungseinrichtung zur Erfassung einer ordnungsgemäßen Verwendung des wenigstens einen Insassen-Rückhaltemittels durch einen Sitzbenutzer vorgesehen ist, die so ausgebildet und/oder ausgelegt ist, dass die wenigstens teilweise Absenkung des Sitzteils oder eines Sitzteil-Teilbereiches mittels der Auslöseeinrichtung im Crashfall nur für den Fall freigegeben ist, dass ein nicht ordnungsgemäß verwendetes Insassen-Rückhaltemittel erfasst wird.

6. Vorrichtung nach einem der vorhergehenden Ansprüche, **dadurch gekennzeichnet, dass** das wenigstens eine Trennelement (58) einen in einem Bolzengehäuse (68) verschiebbar gelagerten Trennbolzen (70) aufweist, der mittels eines Kraftspeichers (78), insbesondere mittels eines Federelementes, in seine Fixierposition vorgespannt ist, und
dass dem Trennbolzen (70) die Treib- und/oder Sprengladung (88) so zugeordnet ist, dass diese den Trennbolzen (70) bei deren Zündung gegen die Kraft des Kraftspeichers (78) verlagert und dadurch den Trennbolzen (70) außer Eingriff mit einem zugeordneten sitzseitigen Eingriffsbereich, insbesondere einem an der Trag- und/oder Verstellmechanik (46) ausgebildeten Eingriffsbereich, bringt.

7. Vorrichtung nach Anspruch 6, **dadurch gekennzeichnet, dass** sich der Trennbolzen (70) in seiner Fixierposition mit einem freien Trennbolzenendbereich (82) in einem formschlüssigen Rasteingriff mit einem Rastgegenelement (84), insbesondere einer Ausnehmung, des Eingriffsbereiches, befindet.

8. Vorrichtung nach Anspruch 6, **dadurch gekennzeichnet, dass** ein freies Trennbolzenende (82) verjüngt, vorzugsweise kegel- oder konusartig, ausgebildet ist und mit einer entsprechend verjüngten, insbesondere kegel- oder konusartig ausgebildeten Ausnehmung (84) des Eingriffsbereiches zusammenwirkt.

9. Vorrichtung nach einem der Ansprüche 6 bis 8, **dadurch gekennzeichnet, dass** der Trennbolzen (70) einen wenigstens bereichs- und/oder abschnittsweise umlaufenden Bolzenbund (72) aufweist, an den sich wenigstens in Richtung auf den Eingriffsbereich zu ein durchmesserkleinerer Schaftbereich eines Bolzenschaftes (74) anschließt,
dass der Trennbolzen (70) mit dem Bolzenbund (72) in einer ersten Bolzenkammer (76) des Bolzengehäuses (68) formschlüssig und zwischen einer Fixierposition, in der sich der Trennbolzen (70) in Eingriff mit dem Eingriffsbereich befindet, und einer Freigabeposition, in der sich der Trennbolzen (70) außer Eingriff mit dem Eingriffsbereich befindet, verlagerbar gelagert ist,
dass in der ersten Bolzenkammer (76) ein Kraftspeicher (78) angeordnet ist, der den Trennbolzen (70) und/oder den Bolzenbund (72) in die Fixierposition kraftbeaufschlagt und/oder in dieser hält,
dass das Bolzengehäuse (68) ferner eine, eine zweite Bolzenkammer ausbildende Aufnahmekammer (86) für die Treib- und/oder Sprengladung (88) aufweist die dem Bolzenschaft (74) zugeordnet ist und die mittelbar oder unmittelbar mit einem Zündmechanismus gekoppelt ist dergestalt, dass bei einer über die Auslöseeinrichtung (64) erfolgenden Zündung der Treib- und/oder Sprengladung (88) die Treibgase den Bolzenbund (72) beaufschlagen und den Trennbolzen (70) gegen die Kraft des Kraftspeichers (78) von der Fixierposition in die Freigabeposition überführen.

10. Vorrichtung nach Anspruch 9, **dadurch gekennzeichnet, dass** sich die Aufnahmekammer (86) unmittelbar an die erste Bolzenkammer (76) anschließt und/oder dass sich an die Aufnahmekammer (86) eine das Bolzenschaftende formschlüssig aufnehmende und führend abstützende Gehäuseausnehmung (96) anschließt, durch die hindurch das freie Trennbolzenende (82) in Richtung auf dessen Rasteingriff mit dem Eingriffsbereich verlagerbar ist.

11. Vorrichtung nach einem der Ansprüche 6 bis 10, **dadurch gekennzeichnet, dass** am Bolzengehäuse (68) ein Anschlusselement (90) für eine elektrische Zündeinrichtung ausgebildet ist, die mit der Auslöseeinrichtung (64) signaltechnisch verbunden ist und bei einer entsprechenden Ansteuerung die Treib- und/oder Sprengladung (88) zündet.

12. Vorrichtung nach einem der Ansprüche 1 bis 5, **dadurch gekennzeichnet, dass** das Trennelement (58) Bestandteil einer Klemmverbindung ist, die wenigstens eine Klemmschelle (104) aufweist, die eine mit dem Schwenkelement (40) verbundene Verstellwelle (102) im Grundzustand verklemmt, wobei das Trennelement (58) die Klemmschelle (104) in deren Klemmposition hält, und
dass das Trennelement (58) als Sprengschraube ausgebildet ist, die bei einer Zündung der Auslöseeinrichtung (64) die Klemmverbindung freigibt und/oder löst.

13. Vorrichtung nach einem der Ansprüche 1 bis 12, **dadurch gekennzeichnet, dass** das Sitzteil (34) so ausgebildet ist, dass nur ein definierter Sitzteil-Teilbereich, insbesondere ein in Fahrtrichtung vorderer oder hinterer Teilbereich, des Sitzteils (34) bei einer Verlagerung und/oder Zerstörung des Trennelementes (58) absenkbar ist.

## Claims

1. Device for lowering a vehicle seat in a motor vehicle, having an actuating device (64) by means of which at least certain areas of a seat section (34) of a vehicle seat which is fixed to a support and/or adjustment structure (46) of the vehicle seat by means of at least one fastening element can be lowered from a defined basic position in the event of a crash, the at least one fastening element being formed by a separating element (58) which undoes the connection between the seat section (34) or a partial region thereof and the support and/or adjustment structure (46), said separating element having an associated propellant and/or explosive charge (88) which can be ignited by the actuating device (64), said charge (88) destroying the separating element (58) and/or shifting it into a release position in order to lower at least certain areas of the seat section (34) or a partial region thereof in the event of ignition of the propellant and/or explosive charge (88), the seat section (34) comprising a swivel element (40) which is pivotally mounted on the support and/or adjustment structure (46) by means of at least one swivel mount (42), and wherein the at least one swivel mount (42) is blocked by the at least one separating element (58) in its non-ignited basic fixing position and is released in the ignition position thereof, such that at least certain areas of the seat section (34) can be pivoted into the lowered position by means of the at least one swivel mount (42), **characterised in that** the swivel element (40) is formed by a transverse tube which is part of the seat section (34) and/or is held directly or indirectly on one upholstery element of the seat section (34).

2. Device according to claim 1, **characterised in that** the swivel mount further comprises a holding element (54), particularly a holding plate, which on the one hand is directly or indirectly attached to the swivel element (40) formed by a transverse tube and on the other hand is directly or indirectly attached to a defined region of the seat section (34), such that, when activated, the separating element (58) enables the holding element (54) to pivot, so that, during a swivelling movement of the swivel element (40) formed by a transverse tube, the holding element (54) moves the seat section (34) or at least a partial region of the seat section (34) into the lowered position.

3. Device according to claim 2, **characterised in that** the separating element (58), particularly a bolt housing (68) comprising a separating bolt (70), is a direct or indirect component of the holding element (54), particularly is clamped and/or attached thereto and/or formed thereon.

4. Device according to one of claims 1 to 3, **characterised in that** the swivel element (40) is secured to the support and/or adjustment mechanism by means of a screw connection, the screw axis of which forms the swivel axis of the swivel mount (42).

5. Device according to one of the preceding claims, **characterised in that** at least one occupant restraint, particularly at least one safety belt, is assigned to the vehicle seat, and
**in that** a detection device is provided for detecting that the at least one occupant restraint is being properly used by a seat user, said detection device being embodied and/or configured such that the at least partial lowering of the seat section or of a partial region of the seat section by means of the actuating device in the event of a crash is only enabled in cases where improper use of the occupant restraint is detected.

6. Device according to one of the preceding claims, **characterised in that** the at least one separating element (58) comprises a separating bolt (70) slidably mounted in a bolt housing (68), which is biased in its fixing position by means of an energy store (78), particularly a spring element, and
**in that** the propellant and/or explosive charge (88) is associated with the separating bolt (70) such that, on ignition, it moves the separating bolt (70) counter to the force of the energy store (78) and thereby moves the separating bolt (70) out of engagement with an associated engagement zone on the seat side, particularly an engagement zone formed on the support and/or adjustment mechanism (46).

7. Device according to claim 6, **characterised in that** in its fixing position the separating bolt (70) is located so that a free end zone (82) thereof is in positively latching engagement with a latching counter-element (84), particularly a recess, of the engagement zone.

8. Device according to claim 6, **characterised in that** a free end (82) of the separating bolt is configured to taper, preferably conically, and cooperates with a correspondingly tapering recess (84), particularly of conical configuration, in the engagement zone.

9. Device according to one of claims 6 to 8, **characterised in that** the separating bolt (70) comprises a bolt flange (72) which surrounds it at least in regions and/or partially, adjacent to which is provided a shank portion of a bolt shank (74) which is smaller in diameter at least towards the engagement zone,
**in that** the separating bolt (70) is mounted with the bolt flange (72) in a first bolt chamber (76) of the bolt housing (68) in positively locking manner and so as to be movable between a fixing position in which the separating bolt (70) is in engagement with the engagement zone and a release position in which the separating bolt (70) is out of engagement with the engagement zone,
**in that** in the first bolt chamber (76) an energy store (78) is provided which biases the separating bolt (70) and/or the bolt flange (72) into the fixing position and/or holds them in this position by the application of force,
**in that** the bolt housing (68) further comprises a receiving chamber (86) for the propellant and/or explosive charge (88), forming a second bolt chamber, which is associated with the bolt shank (74) and is coupled directly or indirectly to an ignition mechanism, such that when the propellant and/or explosive charge (88) is ignited by means of the actuating device (64) the propellant gases act on the bolt flange (72) and move the separating bolt (70) counter to the force of the energy store (78) from the fixing position into the release position.

10. Device according to claim 9, **characterised in that** the receiving chamber (86) is immediately adjacent to the first bolt chamber (76) and/or **in that** adjoining the receiving chamber (86) is a housing recess (96) which receives the end of the bolt shank in positively locking manner and supports it while also guiding it, the free end (82) of the separating bolt being movable through said housing recess towards its latching engagement with the engagement zone.

11. Device according to one of claims 6 to 10, **characterised in that** a connecting element (90) for an electric ignition device is formed on the bolt housing (68), said ignition device being connected to the actuating device (64) by signalling technology and, when correspondingly actuated, igniting the propellant and/or explosive charge (88).

12. Device according to one of claims 1 to 5, **characterised in that** the separating element (58) is part of a clamping connection which comprises at least one collar (104) which clamps a setting shaft (102) connected to the swivel element (40) in the basic position, the separating element (58) holding the collar (104) in its clamping position, and
**in that** the separating element (58) is embodied as an explosive rivet which frees and/or undoes the clamping connection upon ignition of the actuating device (64).

13. Device according to one of claims 1 to 12, **characterised in that** the seat section (34) is embodied such that only a defined partial region of the seat section (34), particularly a partial region of the seat section (34) that is at the front or at the back in the direction of travel, can be lowered when the separating element (58) is moved and/or destroyed.

## Revendications

1. Dispositif pour abaisser un siège de véhicule dans un véhicule automobile, avec un dispositif de déclenchement (64) au moyen duquel une partie de siège (34), fixée à une structure porteuse et/ou de réglage (46) du siège de véhicule au moyen d'au moins un élément de fixation, d'un siège de véhicule peut être abaissée au moins en partie en cas de collision à partir d'une position de base définie, l'au moins un élément de fixation étant formé par un élément séparateur (58) qui coupe la liaison entre la partie de siège (34) ou une zone partielle de partie de siège et la structure porteuse et/ou de réglage (46) et auquel est associée une charge propulsive et/ou explosive (88) qui peut être amorcée par l'intermédiaire du dispositif de déclenchement (64) et qui déplace et/ou détruit l'élément séparateur (58) lorsque la charge propulsive et/ou explosive (88) est amorcée en vue d'abaisser par zones la partie de siège (34) ou une zone partielle de partie de siège dans une position de déblocage, la partie de siège (34) comportant un élément pivotant (40) qui est logé de manière à pouvoir pivoter sur la structure porteuse et/ou de réglage (46) au moyen d'au moins une liaison de palier d'articulation (42) et l'au moins une liaison de palier d'articulation (42) étant bloquée par l'au moins un élément séparateur (58) dans la position de fixation et de base non amorcée de celui-ci et étant débloquée dans la position amorcée de celui-ci de telle sorte que la partie de siège (34) peut pivoter au moins par zones dans la position abaissée au moyen de l'au moins une liaison de palier d'articulation (42), **caractérisé en ce que** l'élément pivotant (40) est formé par un tube transversal qui fait partie de la partie de siège (34) et/ou qui est maintenu directement ou indirectement sur l'élément de rembourrage de partie de siège de la partie de siège (34).

2. Dispositif selon la revendication 1, **caractérisé en ce que** la liaison de palier d'articulation comporte aussi un élément de maintien (54), notamment une plaque de maintien, qui est attaché d'une part directement ou indirectement à l'élément pivotant (40) formé par un tube transversal et d'autre part de telle sorte directement ou indirectement à une zone définie de la partie de siège (34) que l'élément séparateur (58) débloque, lors d'une activation de celui-ci, le pivotement de l'élément de maintien (54) de sorte que l'élément de maintien (54), lors d'un mouvement pivotant de l'élément pivotant (40) formé par un tube transversal, fait passer la partie de siège (34) ou au moins une zone partielle de la partie de siège (34) dans la position abaissée.

3. Dispositif selon la revendication 2, **caractérisé en ce que** l'élément séparateur (58), notamment une chemise d'axe (68) comportant un boulon séparateur (70), fait directement ou indirectement partie de l'élément de maintien (54), notamment est fixé et/ou attaché et/ou formé sur celui-ci.

4. Dispositif selon l'une des revendications 1 à 3, **caractérisé en ce que** l'élément pivotant (40) est fixé au mécanisme porteur et/ou de réglage au moyen d'un assemblage vissé dont l'axe fileté constitue l'axe de pivotement de la liaison de palier d'articulation (42).

5. Dispositif selon l'une des revendications précédentes, **caractérisé en ce qu'**au moins un dispositif de retenue d'occupant, notamment au moins une ceinture de sécurité, est associé au siège de véhicule et **en ce qu'**un dispositif de détection est prévu pour détecter une utilisation normale de l'au moins un dispositif de retenue d'occupant par un utilisateur du siège, lequel dispositif de détection est conçu et/ou agencé de telle sorte que l'abaissement au moins partiel de la partie de siège ou d'une zone partielle de partie de siège est débloqué au moyen du dispositif de déclenchement en cas de collision seulement dans le cas où une utilisation anormale du dispositif de retenue d'occupant est détectée.

6. Dispositif selon l'une des revendications précédentes, **caractérisé en ce que** l'au moins un élément séparateur (58) comporte un boulon séparateur (70) qui est logé de manière à pouvoir être déplacé dans une chemise d'axe (68) et qui est précontraint dans sa position de fixation au moyen d'un accumulateur d'énergie (78), notamment au moyen d'un élément formant ressort, et **en ce que** la charge propulsive et/ou explosive (88) est associée au boulon séparateur (70) de telle sorte que, lorsqu'elle est amorcée, elle déplace le boulon séparateur (70) contre la force de l'accumulateur d'énergie (78) et elle amène ainsi le boulon séparateur (70) hors de prise d'une zone de prise associée côté siège, notamment d'une zone de prise conçue sur le mécanisme porteur et/ou de réglage (46).

7. Dispositif selon la revendication 6, **caractérisé en ce que**, dans sa position de fixation, le boulon séparateur (70) se trouve avec la zone d'extrémité libre de boulon séparateur (82) en prise crantée par concordance de forme avec un élément complémentaire cranté (84), notamment un évidement, de la zone de prise.

8. Dispositif selon la revendication 6, **caractérisé en ce qu'**une extrémité de boulon séparateur (82) est conçue rétrécie, de préférence à la manière d'un cône, et coopère avec un évidement (84), conçu rétréci de manière correspondante, notamment à la manière d'un cône, de la zone de prise.

9. Dispositif selon l'une des revendications 6 à 8, **caractérisé en ce que** le boulon séparateur (70) comporte un collet de boulon (72) qui en fait le tour au moins par zones et/ou par tronçons et auquel se raccorde, au moins dans la direction de la zone de prise, une zone de tige, plus petite en diamètre, d'une tige de boulon (74),
**en ce que** le boulon séparateur (70) est logé avec le collet de boulon (72) dans une première chambre de boulon (76) de la chemise d'axe (68), et ce par concordance de forme et de manière à pouvoir être déplacé entre une position de fixation dans laquelle le boulon séparateur (70) est en prise avec la zone de prise et une position de déblocage dans laquelle le boulon séparateur (70) est hors de prise de la zone de prise,
**en ce que**, dans la première chambre de boulon (76), il est agencé un accumulateur d'énergie (78) qui force le boulon séparateur (70) et/ou le collet de boulon (72) dans la position de fixation et/ou qui le maintient dans cette position,
et **en ce que** la chemise d'axe (68) comporte en plus une chambre de réception (86) qui forme une deuxième chambre de boulon et est destinée à la charge propulsive et/ou explosive (88), laquelle chambre de réception est associée à la tige de boulon (74) et est couplée directement ou indirectement à un mécanisme d'amorçage de telle sorte que, lorsque la charge propulsive et/ou explosive (88) est amorcée par l'intermédiaire du dispositif de déclenchement (64), les gaz propulseurs agissent sur le collet de boulon (72) et font passer le boulon séparateur (70), contre la force de l'accumulateur d'énergie (78), de la position de fixation à la position de déblocage.

10. Dispositif selon la revendication 9, **caractérisé en ce que** la chambre de réception (86) fait directement suite à la première chambre de boulon (76) et/ou **en ce qu'**un évidement de réception (96), recevant par concordance de forme l'extrémité de tige de boulon et soutenant celle-ci en la guidant fait suite à la chambre de réception (86), évidement de réception à travers lequel l'extrémité libre de boulon séparateur (82) peut être déplacée en direction de sa prise crantée avec la zone de prise.

11. Dispositif selon l'une des revendications 6 à 10, **caractérisé en ce qu'**un élément de raccordement (90) destiné à un dispositif d'amorçage électrique est conçu sur la chemise d'axe (68), lequel élément de raccordement est relié au dispositif de déclenchement (64) pour assurer une transmission de signaux et amorce la charge propulsive et/ou explosive (88) en présence d'une commande correspondante.

12. Dispositif selon l'une des revendications 1 à 5, **caractérisé en ce que** l'élément séparateur (58) fait partie d'un assemblage serré qui comporte au moins un collier de serrage (104) qui serre dans l'état de base un arbre de réglage (102) assemblé à l'élément pivotant (40), l'élément séparateur (58) maintenant le collier de serrage (104) dans sa position de serrage,
et **en ce que** l'élément séparateur (58) est conçu comme une vis explosive qui débloque et/ou libère l'assemblage serré lors d'un amorçage du dispositif de déclenchement (64).

13. Dispositif selon l'une des revendications 1 à 12, **caractérisé en ce que** la partie de siège (34) est conçue de telle sorte que seule une zone partielle définie de la partie de siège, notamment une zone partielle avant ou arrière, dans le sens de la marche, de la partie de siège (34) peut être abaissée lors d'un déplacement et/ou d'une destruction de l'élément séparateur (58).
